Europäisches Patentamt

European Patent Office

Office européen des brevets

(11) Veröffentlichungsnummer: **0 168 547**
**B1**

(12) **EUROPÄISCHE PATENTSCHRIFT**

(45) Veröffentlichungstag der Patentschrift:
**24.05.89**

(21) Anmeldenummer: **85101889.5**

(22) Anmeldetag: **21.02.85**

(51) Int. Cl.⁴: **C 08 F 220/28, C 11 D 3/37 //**
**(C08F220/28, 220:04, 222:02)**

(54) **Copolymerisate für Wasch- und Reinigungsmittel.**

(30) Priorität: **18.07.84 DE 3426368**

(43) Veröffentlichungstag der Anmeldung:
**22.01.86 Patentblatt 86/4**

(45) Bekanntmachung des Hinweises auf die Patenterteilung:
**24.05.89 Patentblatt 89/21**

(84) Benannte Vertragsstaaten:
**AT BE CH DE FR GB IT LI NL SE**

(56) Entgegenhaltungen:
**EP-A- 0 076 992**
**EP-A- 0 116 330**
**DE-A- 2 616 261**

(73) Patentinhaber: **BASF Aktiengesellschaft,**
**Carl-Bosch-Strasse 38, D-6700 Ludwigshafen (DE)**

(72) Erfinder: **Denzinger, Walter, Wormser Landstrasse 65,**
**D-6720 Speyer (DE)**
Erfinder: **Hartmann, Heinrich, Dr., Weinheimer**
**Strasse 46, D-6703 Limburgerhof (DE)**
Erfinder: **Hettche, Albert, Dr., Kleiststrasse 12,**
**D-6717 Hessheim (DE)**
Erfinder: **Kaluza, Ulrich, Dr, Im Bruehl 20,**
**D-6903 Neckargemuend (DE)**
Erfinder: **Perner, Johannes, Dr., Ginsterweg 4,**
**D-6730 Neustadt (DE)**
Erfinder: **Vamvakaris, Christos, Dr., Riedweg 6,**
**D-6701 Kallstadt (DE)**

**Beschreibung**

Die Erfindung betrifft Copolymerisate als Inhaltsstoffe für Wasch- und Reinigungsmittel, die monoethylenisch ungesättigte Mono- und Dicarbonsäuren, deren Hydroxyalkylester und gegebenenfalls andere ethylenisch ungesättigte Verbindungen als Monomereinheiten enthalten und sich durch ein besonderes Calcium- und Magnesiumbindevermögen auszeichnen, diese enthalten Wasch- und Reinigungsmittel und ihre Verwendung in Wasch- und Reinigungsmitteln, insbesondere als Sequestrierungsmittel und Vergrauungsinhibitoren.

In der Wasch- und Reinigungsmittelindustrie benötigt man als Inhaltsstoffe bekanntlich neben oberflächenaktiven Stoffen sogenannte Gerüststoffsubstanzen (Builder). Eine der Aufgaben, die diese Builder zu erfüllen haben, ist das Abfangen (Sequestrieren) von wasserunlösliche Salze bildenden Kationen, vornehmlich des Calciums und Magnesiums. Speziell werden diese Gerüststoffe deshalb auch Sequestrierungsmittel genannt. Bisher wurden in grosser Menge hierfür Phosphate, vor allem Pentanatriumtriphosphat, verwendet. Der ungeheure Ausstoss an phosphathaltigen Abwassern bedingte jedoch eine starke Eutrophierung der Gewässer, was zu übermässigem Algenwuchs und damit zur Verarmung der Gewässer an Sauerstoff führte. Die Gesetzgebung vieler Länder ist daher darauf ausgerichtet, Phosphate entweder ganz zu verbieten oder aber recht niedrig liegende Maximalmengen in Waschmitteln festzusetzen.

Zahlreiche Vorschläge, um diese Probleme zu lösen, sind hierzu in den letzten Jahren gemacht worden. Es sei auf die zusammenfassenden Darstellungen in Angew. Chemie 87 (1975), S. 115–123 sowie in der Chemikerzeitung 96 (1972), S. 685–691 verwiesen. Danach wurden zahlreiche als Komplexbildner bekannte nieder- und hochmolekulare Verbindungen getestet, und es zeigte sich, dass Polymerisate auf Basis Acrylsäure und hydroxylgruppenhaltiger Derivate der Acrylsäure schon recht gut geeignet waren, Phosphate teilweise zu ersetzen. Die DE-OS 2 161 727 beschreibt z.B. ein Verfahren zur Sequestrierung von Metallionen mittels Poly-α-hydroxyalkylaten oder deren Derivaten. Laut Angew. Chemie loc. cit. weisen solche Polymerisate bei 20°C ein Calciumbindevermögen von 228 und bei 90°C von 182 mg CaO/g auf. Nachteilig bei diesen Verbindungen ist aber deren relativ schwierige Zugänglichkeit und ihr relativ schlechtes Calciumbindevermögen.

Aus der DE-AS 2 025 238 sind ebenfalls hydroxyl- und carboxylgruppenenthaltende Polymerisate bekannt, die man durch sog. oxidative Polymerisation von Acrolein, gegebenenfalls zusammen mit Acrylsäure oder Derivaten davon und anschliessende Behandlung des Polymerisats bzw. Copolymerisats nach Cannizzaro erhält. Auch diese Polymerisate kommen über ein Bindevermögen von 300 mg CaCO₃/g Wirksubstanz nicht hinaus.

In der US-PS 4 314 044 wird ein Verfahren zur Herstellung von verhältnismässig niedermolekularen, wasserlöslichen Polymeren durch eine Polymerisation in wässriger Lösung mit einem speziellen Katalysatorsystem aus einem wasserlöslichen Initiator, einem tertiären Amin und einem Metallsalz beschrieben und die Verwendung der so hergestellten Polymeren in Waschmitteln als Sequestriermittel und Scaleinhibitoren in allgemeiner Form erwähnt. Als Monomere werden u.a. Acrylsäure und Methacrylsäure, die mit 5 bis 50 Gew.% beispielsweise Itaconsäure, Maleinsäure, Hydroxyethylmethacrylat, Hydroxypropylmethacrylat, Hydroxyethylacrylat, Hydroxypropylacrylat u.a. Acrylderivate und ihrer Mischungen polymerisiert werden können, genannt. In den Ausführungsbeispielen werden Homopolymerisate und nur in zwei Fällen binäre Copolymere aus Acrylsäure und Hydroxyethylmethacrylat beschrieben.

In der DE-AS 2 616 261 werden Copolymerisate aus Acrylsäure und/oder Methacrylsäure mit Acrylsäurehydroxyalkylestern mit 2 bis 4 C-Atomen pro Hydroxyalkylgruppe, die ein gutes Calciumbindevermögen bei Raumtemperatur aufweisen, beschrieben. Bei unter den Waschbedingungen herrschenden Temperaturen von bis zu 95°C ist jedoch das Calcium- und Magnesiumbindevermögen auch dieser Verbindungen aus heutiger Sicht unzureichend.

In der DE-OS 3 140 383 wird die Herstellung von Copolymeren aus Monocarbonsäuren, Dicarbonsäuren, wie Acrylsäure, Methacrylsäure und Maleinsäure, und einem weiteren Monomeren in einer Menge von 0,5 bis 5 Gew.%, wie z.B. Vinylacetat, Butylacrylat oder Hydroxypropylacrylat, und ihre Verwendung in Wasch- und Reinigungsmitteln beschrieben. Ein Ausführungsbeispiel mit Hydroxypropylacrylat liegt nicht vor. Im übrigen weisen auch diese Copolymeren ein ungenügendes Calcium- und Magnesiumbindevermögen, insbesondere bei höheren Temperaturen, auf.

Es stellte sich somit die Aufgabe, ein carboxylgruppenhaltiges wasserlösliches Polymerisat aufzufinden, das leicht herstellbar ist und das vor allem ein hohes Calciumbindevermögen bei erhöhter Temperatur aufweist, so dass es in der Lage ist, in hervorragender Weise Phosphate zu ersetzen.

Die Aufgabe wird erfindungsgemäss gelöst durch Copolymerisate mit einem K-Wert von 8 bis 100 (bestimmt nach H. Fikentscher in wässriger Lösung bei 25°C an 2 gew.%igen Lösungen der Natriumsalze von vollständig neutralisierten Copolymerisaten) erhältlich durch Copolymerisieren von Monomergemischen – jeweils bezogen auf das Gewicht der eingesetzten Monomeren – aus

a) 5 bis 40 Gew.% mindestens einer monoethylenisch ungesättigten Monocarbonsäure mit 3 bis 10 Kohlenstoffatomen,

b) 5 bis 40 Gew.% mindestens einer monoethylenisch ungesättigten Dicarbonsäure mit 4 bis 6 Kohlenstoffatomen oder eines dementsprechenden Dicarbonsäureanhydrids,

c) 30 bis 80 Gew.% mindestens eines Hydroxyalkylesters mit 2 bis 6 C-Atomen in der Hydroxylalkylgruppe von monoethylenisch ungesättigten Mono- und/oder Dicarbonsäuren gemäss a) und/oder b) und

d) 0 bis 10 Gew.% eines oder mehrerer mit den Monomeren a), b) und c) copolymerisierbarer carboxylgruppenfreier, monoethylenisch ungesättigter Monomerer,
und deren Salze.

Die erfindungsgemässen neuen Copolymerisate weisen bei erhöhter Temperatur, insbesondere im Bereich von 50 bis 95°C, ein Calcium- und Magnesiumbindevermögen auf, das das der bisher bekannten Mittel, wie der Copolymerisate der DE-AS 2 616 261, deutlich übertrifft. Ausserdem sind sie gute Vergrauungsinhibitoren.

Als wirksamer Inhaltsstoff in Wasch- und Reinigungsmitteln werden sie insbesondere in Form der wasserlöslichen Ammoniumsalze oder organischer Aminsalze, insbesondere der Salze von Trialkylaminen mit Alkylresten von 1 bis 4 C-Atomen, oder der Salze von Mono-, Di- und/oder Trialkanolaminen mit 1 bis 4 C-Atomen im Alkanolrest, wie Di- und Triethanolamin, oder der Alkalimetallsalze verwendet. Dabei sind die Kalium- und Natriumsalze bevorzugt. Für die praktische Verwendung sind in der Regel 20 bis 100, bevorzugt 50 bis 100% der Cargoxylgruppen neutralisiert.

Ausgangsmonomere a) sind beispielsweise Vinylessigsäure, Allylessigsäure, Propylidenessigsäure, Ethylidenpropionsäure, α-Ethylacrylsäure und β,β-Dimethylacrylsäure sowie ihre Mischungen. Die bevorzugten ethylenisch ungesättigten Monocarbonsäuren a) sind Acrylsäure oder Methacrylsäure und ihre Mischungen.

Die bevorzugt eingesetzte Menge an ethylenisch ungesättigten Monocarbonsäuren a) beträgt 10 bis 30 Gew.%.

Ausgangsmonomere b) sind beispielsweise Mesaconsäure, Fumarsäure, Methylenmalonsäure und Citraconsäure. Die bevorzugten Dicarbonsäuren sind Maleinsäure oder Itaconsäure und ihre Mischungen.

Die bevorzugt eingesetzte Menge an ethylenisch ungesättigten Dicarbonsäuren b) beträgt 10 bis 30 Gew.%.

Die Hydroxyalkylestergruppen der Monomeren c) leiten sich beispielsweise von Alkandiolen, wie Ethandiol-1,2, Propandiol-1,3 und 1,2 sowie deren technische Gemische, Butandiol-1,4, -1,3 und 2,3 sowie ihrer Gemische ab. Im einzelnen seien als Ausgangsmonomere c) beispielsweise erwähnt Hydroxyethylmethacrylat, Hydroxypropylmethacrylate, Monohydroxyethylmaleinat, Dihydroxyethylmaleinat, Monohydroxypropylmaleinate, Dihydroxypropylmaleinate, Monohydroxybutylmaleinate, Dihydroxybutylmaleinate, Monohydroxyethylitaconat. Unter den Hydroxyalkylestern der monoethylenisch ungesättigten Dicarbonsäuren sollen die Mono- und Diester verstanden werden.

Die bevorzugten Hydroxyalkylester c) sind Hydroxyethylacrylat, Butan-1,4-diolmonoacrylat und die Hydroxypropylacrylate. Die besonders bevorzugten Hydroxyalkylester c) sind die Hydroxypropylacrylate, wobei von besonderer technischer Bedeutung die Isomerengemische aus 2-Hydroxy-1-propylacrylat und 1-Hydroxy-2-propylacrylat sind, die durch Umsetzung von Acrylsäure mit Propylenoxid hergestellt werden. Die bevorzugten Mengen eines Hydroxyalkylesters aus a) und/oder b) sind 40 bis 70 Gew.%.

Ausgangsmonomere d), die nicht unbedingt mit einpolymerisiert zu werden brauchen, sind weitere mit den Monomeren a), b) und c) copolymerisierbare, carboxylgruppenfreie und vorzugsweie wasserlösliche Monomere. Beispielsweise kommen in Betracht Acrylamid, Methacrylamid, 2-Acrylamido-2-methylpropansulfonsäure, Vinylsulfonsäure, Allylsulfonsäure, Vinylphosphonsäure, Allylphosphonsäure, Vinylacetat, Vinylpropionat, Acrylnitril, Methacrylnitril, Diethylaminoethyl(meth)acrylat, (Meth)acrylsäuremethylester, Vinylpyrrolidon, Vinylformamid, Vinylimidazol sowie ihre Mischungen untereinander. Einpolymerisierte Sulfon- und Phosphorsäuregruppen können, wie oben angegeben, mit neutralisiert werden.

Die Monomeren d) werden gegebenenfalls in einer Menge von 1 bis 10 Gew.% einpolymerisiert.

Von besonderem Interesse sind die Copolymerisate mit Vinylacetat und Vinylpropionat, die nach partieller oder vollständiger Abspaltung von Essigsäure oder Propionsäure Vinylalkoholeinheiten enthalten. Zur Spaltung der Vinylestergruppen wird eine saure Hydrolyse, wie sie z.B. in Houben-Weyl, Methoden der organischen Chemie, Band XIV/2, S. 700–703, 1963 Georg Thieme Verlag Stuttgart, beschrieben wird, bevorzugt, um eine Verseifung der Acryl- und/oder Maleinhydroxyalkylestergruppen zu vermeiden.

Die Herstellung der erfindungsgemässen Copolymeren erfolgt in an sich üblicher Weise durch Suspensionspolymerisation, Fällungspolymerisation oder Lösungspolymerisation, wobei die Lösungspolymerisation in wässriger Lösung eine bevorzugte Methode darstellt.

Bei der Suspensionspolymerisation erfolgt die Copolymerisation in solchen Lösungsmitteln, in denen die Monomeren höchstens zum Teil löslich und die Copolymeren unlöslich sind und damit ausfällen. Dabei ist es erforderlich, ein Schutzkolloid zur Verhinderung von Aggregatbildung zuzusetzen. Als Lösungsmittel sind beispielsweise geradkettige und verzweigte aliphatische und cycloaliphatische Kohlenwasserstoffe geeignet, wobei jedoch auch jedes andere Lösungsmittel, das den angegebenen Erfordernissen entspricht, eingesetzt werden kann. Vorzugsweise seien beispielsweise genannt Pentan, Hexan, Heptan, Octan, Isooctan, Cyclohexan, Methylcyclohexan, Dimethylcyclohexan und Diethylcyclohexan, wobei Cyclohexan, Methylcyclohexan und Isooctan besonders bevorzugt sind. Als Schutzkolloide zur Verhinderung der Aggregatbildung sind polymere Stoffe geeignet, die in den Lösungsmitteln gut löslich sind, keine Reaktion mit dem Monomeren eingehen und möglichst hydrophil sind. Geeignet sind beispielsweise Copolymere des Maleinsäureanhydrids mit Vinylakylethern mit 10 bis 20 C-Atomen im Alkylrest oder mit Olefinen mit 8 bis 20 C-Atomen sowie deren an den Maleinsäureeinheiten eine oder zwei Estergruppen von $C_{10}$- bis $C_{20}$-Alkoholen oder eine oder zwei Amidgruppen von $C_{10}$- bis $C_{20}$-Alkylaminen tragende Derivate sowie Polyalkylvinylether, deren Alkylgruppen 1 bis 20 C-Atome enthalten, wie beispielsweise Polymethyl-, Polyethyl- und Polyisobutylvinylether, die auch bevorzugt sind. Die zugesetzten Mengen an Schutzkolloid liegen üblicherweise bei 0,05 bis 4 Gew.% (berechnet auf eingesetzte Monomere), vorzugsweise 0,1 bis 2%, wobei es oftmals besonders günstig ist, mehrere Schutzkolloide zu kombinieren. Die K-Werte der genannten Schutzkolloide liegen im Bereich von 20 bis 100, gemessen in 1 gew.%iger Lösung in Cyclohexan bei 25°C.

Bei der Fällungspolymerisation erfolgt die Copolymerisation in solchen Lösungsmitteln, in denen die Monomeren löslich und die Polymeren dann unlöslich sind und ausfallen. Als Lösungsmittel kommen hierfür in Frage alkylsubstituierte Benzolkohlenwasserstoffe oder aliphatische Halogenkohlenwasserstoffe sowie Mischungen davon; wobei jedoch auch jedes andere Lösungsmittel, das den angegebenen Erfordernissen entspricht, eingesetzt werden kann. Vorzugsweise seien beispielsweise genannt Toluol, p-Xylol, m-Xylol, o-Xylol sowie deren techn. Gemische, Ethylbenzol, Diethylbenzol, Methylethylbenzol, Methylenchlorid, 1,1- und 1,2-dichlorethan, 1,1,1-Trichlorethan, 1,1,2-Trichlorethylen, 1,1,2-Trichlorethan, Perchlorethylen, 1,2-Dichlorpropan, Butylchlorid, 1,1,2-Trichlor-1,2,2-trifluorethan, 1,1,1,2-Tetrachlor-2,2-difluorethan und 1,1,2,2-Tetrachlor-1,2-difluorethan, wobei Toluol, Xylol in Form seiner technischen Gemische, 1,1,1-Trichlorethan und die genannten Fluorchlorkohlenwasserstoffe besonders bevorzugt sind und Toluol von besonderem techn. Interesse ist.

Auch bei der Durchführung der Fällungspolymerisation ist es oftmals von Vorteil, besonders wenn bei Konzentrationen von 50% und mehr gearbeitet wird, ein Schutzkolloid zur Verhinderung der Aggregatbildung zuzusetzen. Als Schutzkolloide sind dieselben polymeren Stoffe geeignet, die weiter oben als für die Suspensionspolymerisation brauchbar beschrieben worden sind. Auch die zu verwendenden Mengen an Schutzkolloid liegen üblicherweise in derselben Grössenordnung wie oben angegeben.

Für die Suspensions- und die Fällungspolymerisation gelten gemeinsam folgende Kriterien:

Die Monomerenkonzentrationen bei der Polymerisation liegen zwischen 20 und 70%, bevorzugt 30 und 60 Gew.%, berechnet auf das Gesamtgewicht der Reaktionsmischung.

Zur Erzielung von Copolymeren mit niedrigen Restgehalten an monomerer Dicarbonsäure oder monomerem Dicarbonsäureanhydrid legt man mindestens 1/3 der Dicarbonsäure oder des Dicarbonsäureanhydrids mit den Lösungs- bzw. Verdünnungsmitteln im Reaktor vor und fährt den Rest Dicarbonsäure oder Dicarbonsäureanhydrid

in 2/3 der Zulaufzeit der Monocarbonsäure zu. Meist ist es von Vorteil, die Dicarbonsäure oder ihr Anhydrid insgesamt im Reaktor vorzulegen. Die Monocarbonsäure muss immer zugefahren werden, wobei Zulaufzeiten von 2 bis 10 Stunden, vorzugsweise 3 bis 7 Stunden, erforderlich sind. Die Hydroxylalkylester und gegebenenfalls das carboxylgruppenfreie Comonomere können sowohl ganz als auch teilweise vorgelegt oder auch mit der Monocarbonsäure zudosiert werden, wobei letztere Arbeitsweise bevorzugt ist.

Die Polymerisationstemperatur liegt zwischen 50 und 180°C, wobei es von Vorteil ist, bei Temperaturen von 50 bis 100°C die Hauptreaktion durchzuführen, um Copolymere mit mittleren K-Werten zu erzielen und dann zum Auspolymerisieren die Temperaturen auf max. 180°C zu erhöhen, um niedrige Restgehalte an monomerer Dicarbonsäure zu erzielen.

Als radikalische Initiatoren sind solche geeignet, die bei den gewählten Temperaturen eine Halbwertszeit von weniger als 3 Stunden aufweisen. Wird beispielsweise bei niedriger Temperatur anpolymerisiert und bei höherer Temperatur auspolymerisiert, so muss mit mindestens 2 Initiatoren gearbeitet werden. Beispielsweise sind für die genannten Polymerisationstemperaturen folgende Initiatoren geeignet:

Temp.: 50 bis 60°C:
Acetylcyclohexansulfonylperoxid, Diacetylperoxidicarbonat, Dicyclohexylperoxidicarbonat, Di-2-ethylhexylperoxidicarbonat, tert.-Butylperneodecanoat, 2,2′-Azobis-(4-methoxi-2,4-dimethylvaleronitril)
Temp.: 70 bis 80°C:
tert.-Butylperpivalat, Dioctanoylperoxid, Dilauroylperoxid, 2,2′-Azobis-(2,4-dimethylvaleronitril)
Temp.: 90 bis 100°C
Dibenzoylperoxid, tert.-Butylper-2-ethylhexanoat, tert.-Butylpermaleinat, 2,2-Azobis-(isobutyronitril)
Temp.: 110 bis 120°C:
Bis-(tert.-butylperoxi)-cyclohexan, tert.-Butylperoxiisopropylcarbonat, tert.-Butylperacetat
Temp.: 130 bis 140°C:
2,2-Bis-(tert.-butylperoxi)-butan, Dicumylperoxid, Di-tert.-amylperoxid, Di-tert.-butylperoxid
Temp.: 150°C:
p-menthanhydroperoxid, Pinanhydroperoxid, Cumolhydroperoxid, tert.-Butylhydroperoxid.

Durch die Mitverwendung von Redox-Coinitiatoren, beispielsweise Benzoin, Dimethylanilin sowie organisch löslicher Komplexe und Salze von Schwermetallen, wie Kupfer, Kobalt, Mangan, Eisen, Nickel und Chrom, können die Halbwertszeiten der genannten Peroxide, besonders der Hydroperoxide, verringert werden, so dass beispielsweise tert.-Butylhydroperoxid in Gegenwart von 5 ppm Kupfer-II-Acetylacetonat bereits bei 100°C wirksam ist.

Für die Polymerisation geeignete Apparaturen sind übliche Rührkessel, z.B. solche mit Anker-, Blatt-, Impeller- oder Mehrstufenimpulsgegenstromrührer. Besonders geeignet sind Apparaturen, die im Anschluss an die Polymerisation die direkte Isolierung des Festproduktes gestatten, wie z. B. Schaufeltrockner.

Die erhaltenen Polymerisatsuspensionen können direkt in Verdampfern, wie Bandtrocknern, Schaufeltrocknern, Sprühtrocknern und Wirbelbetttrocknern, getrocknet werden. Man kann aber auch die Polymerisate durch Filtrieren oder Zentrifugieren von der Hauptmenge der Lösungsmittel abtrennen und gegebenenfalls durch Nachwaschen mit frischen Lösungsmitteln Reste von Initiator, Monomeren und Schutzkolloiden entfernen und erst dann trocknen.

Meist fallen die Copolymeren nach dem Trocknen, besonders wenn in Gegenwart von Schutzkolloiden gearbeitet wird, in Form feiner Pulver an, die oft den pulver- oder granulatförmigen Waschmitteln ohne weiteres zugemischt werden können. Oftmals ist es jedoch von Vorteil, die Copolymerisatpulver durch Mischen mit Alkalicarbonaten und/oder Alkalihydroxiden in Salze überzuführen und dann erst den Waschmitteln zuzumischen.

Aus den Copolymerisatsuspensionen können auch durch Zugabe von Wasser und anschliessendes Abdestillieren des Lösungsmittels mit Wasserdampf wässrige Polymerisatlösungen erhalten werden, die dann je nach Bedarf mit Alkali, Aminen, Alkanolaminen oder Ammoniak neutralisiert werden können.

Lösungspolymerisationen können beispielsweise in Aceton, Methylethylketon, Tetrahydrofuran, Dioxan, Methanol, Ethanol, n-Propanol, Isopropanol, n-Butanol, sek.-Butanol, tert.-Butanol oder ihren Mischungen untereinander oder auch in Mischung mit Wasser durchgeführt werden. Bei der Verwendung von Alkoholen ist es zweckmässig, die Dicarbonsäuren b) in der Säureform einzusetzen, da die Anhydride mit den Alkoholen zu den Monoestern reagieren können.

Bei der bevorzugten Lösungspolymerisation in wässriger Lösung, geht man in der Regel so vor, dass man zunächst eine wässrige Lösung der Dicarbonsäure b), ihres Alkalimetallsalzes oder Anhydrids vorlegt. Der pH-Wert dieser Lösung kann in weiten Grenzen, vorzugsweise zwischen 2 und 10, schwanken. Anschliessend wird innerhalb von 3 bis 10 Stunden, vorzugsweise 5 bis 8 Stunden die Monocarbonsäure a) oder ihr Alkalimetallsalz und der Initiator, zweckmässigerweise ebenfalls in wässriger Lösung, zugefügt. Die Hydroxyalkylester c) und gegebenenfalls ein oder mehrere carboxylgruppenfreie Monomere d) können sowohl ganz als auch teilweise vorgelegt oder auch, was bevorzugt ist, mit der Monocarbonsäure a) zudosiert werden.

Bei einer besonders bevorzugten Ausführungsform werden die Carbonsäuregruppen von a) und b) zu 20 bis 80%, vorzugsweise 30 bis 70% neutralisiert. Dies kann dadurch erfolgen, dass man die Dicarbonsäuren oder einen Teil davon in Form ihrer Salze, und die Monocarbonsäuren in freier Form einsetzt. Man kann aber auch umgekehrt verfahren und die Dicarbonsäuren in freier Form oder soweit möglich als Anhydride und die Monocarbonsäuren in Form ihrer Salze verwenden. In jedem Fall wird man dafür Sorge tragen, dass das Verhältnis freier Säuren zu den Salzen einem Gesamtneutralisationsgrad im oben angegebenen Bereich entspricht. Dabei sind Natronlauge und Kalilauge zur Neutralisation bevorzugt.

Die Lösungspolymerisation wird in Gegenwart radikalbildender Initiatoren durchgeführt. Hierfür kommen sowohl wenig wasserlösliche als auch gut wasserlösliche Initiatoren in Betracht. Als wenig wasserlöslich sind beispielsweise die bereits für die Suspensions- und Fällungspolymerisation aufgeführten Per- und Azoverbindungen zu nennen. Als wasserlösliche Initiatoren, die von besonderem technischen Interesse sind, kommen z.B. Wasserstoffperoxid, Peroxidisulfate, vor allem Na- oder Ammoniumperoxidisulfat, Azo-bis-(2-aminopropan)-hydrochlorid in Betracht. Vorzugsweise verwendet man Wasserstoffperoxid und ganz besonders bevorzugt ist eine Mischung von Wasserstoffperoxid und einem Peroxidisulfat im Gewichtsverhältnis 3:1 bis 1:3. Die Initiatoren werden zu 0,5 bis 5 Gew.%, bezogen auf die Summe der Monomeren, eingesetzt. Manchmal ist es vorteilhaft, Kombinationen von wenig wasserlöslichen mit gut wasserlöslichen Initiatoren einzusetzen, wie beispielsweise Wasserstoffperoxid und tert.-Butylperpivalat oder Kaliumpersulfat und 2,2'-Azobis-(isobutyronitril).

Bei der Lösungspolymerisation in wässrigem Medium wird die Konzentration der Monomeren zweckmässigerweise so gewählt, dass die wässrige Lösung 20 bis 70 Gew.%, vorzugsweise 40 bis 60 Gew.% an Gesamtmonomeren enthält. Die Reaktionstemperatur kann in weiten Grenzen variiert werden, zweckmässigerweise wählt man Temperaturen zwischen 60 und 150°C, vorzugsweise 100 bis 130°C. Als Reaktionsgefässe wählt man, falls oberhalb der Siedetemperatur des Wassers gearbeitet wird, Druckgefässe, wie Autoklaven.

Ausserdem können die bei radikalischen Polymerisationen üblichen Regler, beispielsweise Schwefelverbindungen, wie Thioglykolsäure oder 2-Merkaptoethanol und/oder $C_1$–$C_4$-Aldehyde, wie Butyraldehyd und/oder sekundäre Alkohole, wie Isopropanol oder sek.-Butanol, oder Kettenverlängerer, wie Methylenbisacrylamid oder Divinylglykol, zum Einsatz gelangen, und zwar bezogen auf die Summe der Monomeren, zu 0,1 bis 10, bevorzugt 0,5 bis 5 Gew.%.

Die erfindungsgemässen Copolymerisate weisen K-Werte von 8 bis 100 und bevorzugt K-Werte von 20 bis 80 auf. Die Bestimmung des K-Werts erfolgt dabei an 2 gew.-%igen Lösungen der Natriumsalze von vollständig neutralisierten Copolymeren in Wasser bei 25°C. Der K-Wert ist erläutert in H. Fikentscher, Cellulosechemie, 14, 58 bis 64 und 71 bis 74 (1932). Dabei bedeutet K = k.10³.

Die so hergestellten Copolymerisate können in an sich üblicher Weise, beispielsweise durch Sprühtrocknung getrocknet und in fester Form erhalten werden. Sie können aber auch in Form der erhaltenen wässrigen Lösung weiterverarbeitet werden. Dabei ist es oft von Vorteil, nach der Polymerisation die Carboxylgruppen bis zu 100% zu neutralisieren. Je nach Verwendung in pulverförmigen oder flüssigen Waschmitteln kommen als Neutralisationsmittel dann vorzugsweise Alkalihydroxide oder Alkanolamine, wie insbesondere Ethanolamin, Diethanolamin und Triethanolamin, in Betracht.

Die erfindungsgemässen Copolymerisate haben sich als ausgezeichnete Sequestrierungsmittel erwiesen, deren Calciumbindevermögen im Hampshire-Test (siehe Anwendungsbeispiel C) (Trübungstitration) insbesondere bei hohen Temperaturen deutlich über dem des Pentanatriumtriphosphats und auch der bisher bekannten hydroxyl- und carboxylgruppenhaltigen Copolymerisate liegt. Bezüglich der Verhinderung der Vergrauung ist gegenüber Phosphat ebenfalls eine Verbesserung festzustellen und die inhibierende Wirkung kommt beispielsweise der von Carboxymethylcellulose gleich. Darüberhinaus weisen sie in den Waschmittelformulierungen eine gute Primärwaschwirkung auf.

Die erfindungsgemässen Copolymerisate werden in Waschmittel- und Reinigungsformulierungen im allgemeinen zu 0,1 bis 50 Gew.%, bevorzugt 0,5 bis 20 Gew.% und ganz besonders bevorzugt 0,5 bis 10 Gew.%, bezogen auf das Gesamtgewicht der Waschmittelformulierung, eingesetzt.

Gegenstand der vorliegenden Erfindung sind demnach auch Wasch- und Reinigungsmittel, die diese Copolymerisate neben den üblichen, dem Fachmann bekannten Bestandteilen enthalten und die Verwendung dieser Copolymerisate insbesondere als Sequestrierungsmittel und Vergrauungsinhibitoren.

Erfindungsgemässe Wasch- und Reinigungsmittelformulierungen, die, bezogen auf das Gesamtgewicht, 0,1 bis 50, bevorzugt 0,5 bis 20 Gew.%, ganz besonders bevorzugt 0,5 bis 10 Gew.%, erfindungsgemässes Copolymerisat enthalten, enthalten in der Regel als zusätzliche Bestandteile, bezogen auf das Gesamtgewicht, 6 bis 25 Gew.% Tenside, 15 bis 50 Gew.% Builder und gegebenenfalls Co-Builder, 5 bis 35 Gew.% Bleichmittel und gegebenenfalls Bleichmittelaktivatoren, 3 bis 30 Gew.% Hilfsstoffe, wie Enzyme, Schaumregulatoren, Korrosionsinhibitoren, optische Aufheller, Duftstoffe, Farbstoffe, oder Formulierhilfsmittel.

Die erfindungsgemässen Copolymerisate können in ihrer Eigenschaft als hervorragende Sequestrierungsmittel und Vergrauungsinhibitoren auch verwendet werden in Wasch- und Reinigungsformulierungen zusammen mit den weniger wirksamen Sequestrierungsmitteln des Standes der Technik, wobei die allgemeinen Eigenschaften im Hinblick auf Sequestrierung, Vergrauungsinhibierung und Primärwaschwirkung deutlich verbessert werden. Übliche, dem Fachmann bekannte Bestandteile von Waschmittelformulierungen, bezogen auf die o.a. Rahmenvorschrift, seien im folgenden beispielsweise aufgezählt:

Geeignete Tenside sind solche, die im Molekül wenigstens einen hydrophoben organischen Rest und eine wasserlöslich machende anionische, zwitterionische oder nichtionische Gruppe enthalten. Bei dem hydrophoben Rest handelt es sich meist um einen aliphatischen Kohlenwasserstoffrest mit 8 bis 26, vorzugsweise 10 bis 22 und insbesondere 12 bis 18 C-Atomen, oder um einen alkylaromatischen Rest mit 6 bis 18, vorzugsweise 8 bis 16 aliphatischen C-Atomen.

Geeignete synthetische anionische Tenside sind insbesondere solche vom Typ der Sulfonate, Sulfate oder der synthetischen Carboxylate.

Als Tenside vom Sulfonattyp kommen Alkylbenzolsulfonate mit 4 bis 15 C-Atomen im Alkyl, Gemische aus Alken- und Hydroxyalkansulfonaten sowie Disulfonaten, wie man sie beispielsweise aus Monoolefinen mit end- oder innenständiger Doppelbindung durch Sulfonieren mit gasförmigem Schwefeltrioxid und anschliessende alkalische oder saure Hydrolyse der Sulfonierungsprodukte erhält, in Betracht. Weiter eignen sich Alkansulfonate, die aus Alkanen durch Sulfochlorierung oder Sulfoxydation und anschliessende Hydrolyse bzw. Neutralisation bzw. durch Bisulfitaddition an Olefine erhältlich sind. Weitere brauchbare Tenside vom Sulfonattyp sind die Ester von α-Sulfofettsäuren, z.B. die α-Sulfonsäuren aus hydrierten Methyl- oder Ethylestern der Kokos-, Palmkern- oder Talgfettsäure.

Geeignete Tenside vom Sulfattyp sind die Schwefelsäuremonoester primärer Alkohole, z.B. aus Kokosfettalkoholen, Talgfettalkoholen oder Oleylalkohol, und solche von sekundären Alkoholen. Weiterhin eignen sich sulfatierte Fettsäurealkanolamine, Fettsäuremonoglyceride oder Umsetzungsprodukte von 1 bis 4 Mol Ethylenoxid mit primären oder sekundären Fettalkoholen oder Alkylphenolen.

Weitere geeignete anionische Tenside sind die Fettsäureester bzw. -amide von Hydroxy- oder Aminocarbonsäuren bzw. -sulfonsäuren, wie z.B. die Fettsäuresarcoside, -glykolate, -lactate, -tauride oder -isothionate.

Die anionischen Tenside können in Form ihrer Natrium-, Kalium- und Ammoniumsalze sowie als lösliche Salze organischer Basen, wie Mono-, Di- oder Triethanolamin, vorliegen.

Als nichtionische Tenside (Nonionics) sind z.B. Anlagerungsprodukte von 4 bis 40, vorzugsweise 4 bis 20 Mol Ethylenoxid an 1 Mol Fettalkohol, Alkylphenol, Fettsäure, Fettamin, Fettsäureamid oder Alkansulfonamid verwendbar. Besonders wichtig sind die Anlagerungsprodukte von 5 bis 16 Mol Ethylenoxid an Kokos- oder Talgfettalkohole, an Oleylalkohol oder an sekundäre Alkohole mit 8 bis 18, vorzugsweise 12 bis 18 C-Atomen, sowie an Mono- oder Dialkylphenole mit 6 bis 14 C-Atomen in den Alkylresten. Neben diesen wasserlöslichen Nonionics sind aber auch nicht bzw. nicht vollständig wasserlösliche Polyglykolether mit 1 bis 4 Ethylenglykoletherresten im Molekül

von Interesse, insbesondere wenn sie zusammen mit wasserlöslichen nichtionischen oder anionischen Tensiden eingesetzt werden.

Weiterhin sind als nichtionische Tenside die wasserlöslichen, 20 bis 250 Ethylenglykolethergruppen und 10 bis 100 Propylenglykolethergruppen enthaltenden Anlagerungsprodukte von Ethylenoxid an Polypropylenglykol, Alkylendiaminopolypropylenglykol und Alkylpolypropylenglykole mit 1 bis 10 C-Atomen in der Alkylkette brauchbar, in denen die Polypropylenglykolkette als hydrophober Rest fungiert.

Auch nichtionische Tenside vom Typ der Aminoxide oder Sulfoxide sind verwendbar.

Das Schaumvermögen der Tenside lässt sich durch Kombination geeigneter Tensidtypen steigern oder verringern. Eine Verringerung lässt sich ebenfalls durch Zusätze von nichttensidartigen organischen Substanzen erreichen.

Als Buildersubstanzen sind beispielsweise geeignet: Waschalkalien, wie Natriumcarbonat und Natriumsilicat, oder Komplexbildner, wie Phosphate, oder Ionenaustauscher, wie Zeolithe, sowie deren Mischungen. Diese Gerüst- und Aufbaustoffe haben die Aufgabe, die teils aus Wasser, teils aus Schmutz oder dem Textilgut stammenden Härteionen zu eliminieren und die Tensidwirkung zu unterstützen. Neben den o.g. Buildersubstanzen können weiter im Builder sogenannte Co-builder enthalten sein. Die Co-builder haben in modernen Waschmitteln die Aufgabe, einige Eigenschaften der Phosphate zu übernehmen, wie z.B. Sequestrierwirkung, Schmutztragevermögen, Primär- und Sekundärwaschwirkung.

Im Builder können z.B. wasserunlösliche Silicate, wie sie in der DE-OS 2 412 837 beschrieben werden, und/oder Phosphate vorhanden sein. Aus der Gruppe der Phosphate können Pyrophosphat, Triphosphat, höhere Polyphosphate und Metaphosphate verwendet werden. Auch phosphorhaltige organische Komplexbildner, wie Alkanpolyphosphonsäuren, Amino und Hydroxyalkanpolyphosphonsäuren und Phosphonocarbonsäuren kommen als weitere Waschmittelinhaltsstoffe in Betracht. Beispiele solcher Waschmitteladditive sind z.B. die folgenden Verbindungen: Methandiphosphonsäure, Propan-1,2,3-triphosphonsäure, Butan-1,2,3,4-tetraphosphonsäure, Polyvinylphosphonsäure, 1-Aminoethan-1,1-diphosphonsäure, 1-Amino-1-phenyl-1,1-diphosphonsäure, Aminotrismethylen-triphosphonsäure, Methylamino- oder Ethylaminobismethylendiphosphonsäure, Ethylendiaminotetramethylentetraphosphonsäure, Ethylentriaminopentamethylenpentaphosphonsäure, 1-Hydroxyethan-1,1-diphosphonsäure, Phosphonoessig- und Phosphonopropionsäure, Mischpolymerisate aus Vinylphosphonsäure und Acryl- und/oder Maleinsäure, sowie deren teil- oder vollneutralisierten Salze.

Weitere organische Verbindungen, die als Komplexierungsmittel für Calcium wirken und in Waschmittelformulierungen enthalten sein können, sind Polycarbonsäuren, Hydroxycarbonsäuren und Aminocarbonsäuren, die meist in Form ihrer wasserlöslichen Salze eingesetzt werden.

Beispiele für Polycarbonsäuren sind Dicarbonsäuren der allgemeinen Formel $HOOC-(CH_2)_m-COOH$ mit m = 0-8, ausserdem Maleinsäure, Methylenmalonsäure, Citraconsäure, Mesaconsäure, Itaconsäure, nicht cyclische Polycarbonsäuren mit wenigstens 3 Carboxygruppen in Molekül, wie z.B. Tricarballylsäure, Aconitsäure, Ethylentetracarbonsäure, 1,1,3-Propan-tetracarbonsäure, 1,1,3,3,5,5-Pentan-hexacarbonsäure, Hexanhexacarbonsäure, cyclische Di- oder Polycarbonsäuren, wie z.B. Cyclopentan-tetracarbonsäure, Cyclohexan-hexacarbonsäure, Tetrahydrofurantetracarbonsäure, Phthalsäure, Terephthalsäure, Benzoltri-, tetra- oder -pentacarbonsäure sowie Mellithsäure.

Beispiele für Hydroxymono- oder -polycarbonsäuren sind Glykolsäure, Milchsäure, Äpfelsäure, Tartronsäure, Methyltartronsäure, Gluconsäure, Glycerinsäure, Citronensäure, Weinsäure, Salicylsäure.

Beispiele für Aminocarbonsäuren sind Glycin, Glycylglycin, Alanin, Asparagin, Glutaminsäure, Aminobenzoesäure, Iminodi- oder -triessigsäure, Hydroxyethyliminodiessigsäure, Ethylendiaminotetraessigsäure, Hydroxyethyl-ethylendiamintriessigsäure, Diethylentriamin-pentaessigsäure sowie höhere Homologe, die durch Polymerisation eines N-Aziridylcarbonsäurederivates, z.B. der Essigsäure, Bernsteinsäure, Tricarballylsäure, und anschliessende Verseifung, oder durch Kondensation von Polyaminen mit einem Molekulargewicht von 500 bis 10000 mit chloressigsauren oder bromessigsauren Salzen hergestellt werden können.

Als Co-Buildersubstanzen werden bevorzugt polymere Carbonsäuren verwendet. Zu diesen polymeren Carbonsäuren sind die Carboxymethylether der Zucker, der Stärke und der Cellulose zu zählen.

Unter den polymeren Carbonsäuren spielen z.B. die Polymerisate der Acrylsäure, Maleinsäure, Itaconsäure, Mesaconsäure, Aconitsäure, Methylenmalonsäure, Citraconsäure und dgl. die Copolymerisate der oben genannten Carbonsäuren untereinander oder mit ethylenisch ungesättigten Verbindungen, wie Ethylen, Propylen, Isobutylen, Vinylalkohol, Vinylmethylether, Furan, Acrolein, Vinylacetat, Acrylamid, Acrylnitril, Methacrylsäure, Crotonsäure etc. wie z.B. die 1:1-Mischpolymerisate aus Maleinsäureanhydrid und Ethylen bzw. Propylen bzw. Furan eine besondere Rolle.

In den Co-Buildern können weiterhin Schmutzträger enthalten sein, die den von der Faser abgelösten Schmutz in der Flotte suspendiert halten und so das Vergrauen inhibieren. Hierzu sind wasserlösliche Kolloide meist organischer Natur geeignet, wie beispielsweise die wasserlöslichen Salze polymerer Carbonsäuren, Leim, Gelatine, Salze von Ethercarbonsäuren oder Ethersulfonsäuren der Stärke oder der Cellulose oder Salze von sauren Schwefelsäureestern der Cellulose oder der Stärke. Auch wasserlösliche, saure Gruppen enthaltende Polyamide sind für diesen Zweck geeignet. Weiterhin lassen sich lösliche Stärkepräparate und andere als die oben genannten Stärkeprodukte verwenden, wie z.B. abgebaute Stärke, Aldehydstärken usw. Auch Polyvinylpyrrolidon ist brauchbar.

Bleichmittel sind insbesondere Wasserstoffperoxid und Derivate oder Aktivchlor-liefernde Verbindungen. Unter den als Bleichmittel dienenden, in Wasser $H_2O_2$ liefernden Verbindungen haben Natriumborat-peroxidhydrate, wie $NaBO_2 \cdot H_2O_2 \cdot 3H_2O$ und $NaBO_2 \cdot H_2O_2$, besondere Bedeutung. Es sind aber auch andere $H_2O_2$ liefernde Borate brauchbar. Diese Verbindungen können teilweise oder vollständig durch andere Aktivsauerstoffträger, insbesondere durch Peroxyhydrate, wie Peroxycarbonate, Peroxophosphate, Citratperhydrate, Harnstoff-$H_2O_2$- oder Melamin-$H_2O_2$-Verbindungen sowie durch $H_2O_2$ liefernde persaure Salze, wie z.B. Peroxosulfate, Perbenzoate oder Peroxyphthalate, ersetzt werden.

Es empfiehlt sich, übliche wasserlösliche und/oder wasserunlösliche Stabilisatoren für die Peroxyverbindungen zusammen mit diesen in Mengen von 0,25 bis 10 Gew.%, bezogen auf die Peroxiverbindung, einzuarbeiten. Als wasserunlösliche Stabilisatoren eignen sich die meist durch Fällung aus wässrigen Lösungen erhaltenen Magnesiumsilikate $MgO:SiO_2$ der Zusammensetzung 4:1 bis 1:4, vorzugsweise 2:1 bis 1:2 und insbesondere 1:1. An deren Stelle sind auch andere Erdalkalimetallsilicate entsprechender Zusammensetzung brauchbar.

Um beim Waschen bereits bei Temperaturen unterhalb 80°C, insbesondere im Bereich von 60 bis 40°C, eine befriedigende Bleichwirkung zu erreichen, werden zweckmässigerweise Bleichaktivatoren in die Waschmittel eingearbeitet, vorteilhaft in einer Menge, bezogen auf die $H_2O_2$-liefernde Verbindung, von 5 bis 30 Gew.%.

Als Aktivatoren für in Wasser $H_2O_2$ liefernde Perverbindungen dienen bestimmte, mit $H_2O_2$ organische Persäuren bildende N-Acyl-, O-Acyl-Verbindungen, insbesondere Acetyl-, Propionyl- oder Benzoylverbindungen, sowie Kohlensäure- bzw. Pyrokohlensäureester. Brauchbare Verbindungen sind unter anderen:

N-diacylierte und N,N'-tetraacylierte Amine, wie z.B. N,N,N',N'-Tetraacetyl-methylendiamin oder -ethylendiamin, N,N-Diacetylanilin und N,N-Diacetyl-p-toluidin bzw. 1,3-diacrylierte Hydantoine, Alkyl-N-sulfonyl-carbonamide, N-acylierte cyclische Hydrazide, acylierte Triazole oder Urazole, wie z.B. das Monoacetylmaleinsäurehydrazid, O,N,N-trisubstituierte Hydroxylamine, wie z.B. O-Benzoyl-N,N-succinyl-hydroxylamin, O-Acetyl-N,N-succinyl-hydroxylamin, O-p-Methoxybenzoyl-N,N-succinylhydroxylamin, O-p-Nitrobenzoyl-N,N-succinylhydroxylamin und O,N,N-Triacetyl-hydroxylamin, Carbonsäureanhydride, z.B. Benzoesäureanhydrid, m-Chlorbenzoesäureanhydrid, Phthalsäureanhydrid, 4-Chlorphthalsäureanhydrid, Zuckerester, wie z.B. Glucosepentaacetat, imidazolidinderivate, wie 1,3-Dichlor-

myl-4,5-diacetoxyimidazolidin, 1,3-Diacetyl-4,5-diacetoxy-imidazolidin, 1,3-Diacetyl-4,5-di-propionyloxy-imidazolidin, acylierte Glykolurile, wie z.B. Tetrapropionylglykoluril oder Diacetyl-dibenzoylglykoluril, dialkylierte 2,5-Diketopiperazine, wie z.B. 1,4-Diacetyl-2,5-diketopiperazin, 1,4-Dipropionyl-2,5-diketopiperazin, 1,4-Dipropionyl-3,6-dimethyl-2,5-diketopiperazin, Acetylierungs- bzw. Benzoylierungsprodukte von Propylendiharnstoff bzw. 2,2-Dimethyl-propylendiharnstoff, das Natriumsalz der p-(Ethoxycarbonyloxy)-benzoesäure und der p-(Propoxycarbonyloxy)-benzolsulfonsäure sowie die Natriumsalze von alkylierten oder acylierten Phenolsulfonsäureestern, wie p-Acetoxy-benzolsulfonsäure, 2-Acetoxy-5-nonyl-benzolsulfonsäure, 2-Acetoxy-5-propylbenzolsulfonsäure oder der Isononanoyloxyphenylsulfonsäure.

Als Bleichmittel können auch Aktivchlorverbindungen anorganischer oder organischer Natur eingesetzt werden. Zu den anorganischen Aktivchlorverbindungen gehören Alkalihypochlorite, die insbesondere in Form ihrer Mischsalze bzw. Anlagerungsverbindungen an Orthophosphate oder kondensierte Phosphate, wie beispielsweise an Pyro- und Polyphosphate oder an Alkalisilikate, verwendet werden können. Enthalten die Wasch- und Waschhilfsmittel Monopersulfate und Chloride, so bildet sich in wässriger Lösung Aktivchlor.

Als organische Aktivchlorverbindungen kommen insbesondere die N-Chlorverbindungen in Frage, bei denen ein oder zwei Chloratome an ein Stickstoffatom gebunden sind, wobei vorzugsweise die dritte Valenz der Stickstoffatome an eine negative Gruppe führt, insbesondere an eine CO- oder $SO_2$-Gruppe. Zu diesen Verbindungen gehören Dichlor- und Trichlorcyanursäure bzw. deren Salze, chlorierte Alkylguanide oder Alkylbiguanide, chlorierte Hydantoine und chlorierte Melamine.

Als zusätzliche Hilfsstoffe werden beispielsweise aufgeführt: Als Schaumregulatoren eignen sich, vor allem bei der Verwendung von Tensiden vom Sulfonat- oder Sulfattyp, kapillaraktiver Carboxy- oder Sulfobetaine sowie die obenerwähnten Nonionics vom Alkylolamidtyp. Für diesen Zweck sind auch Fettalkohole oder höhere endständige Diole geeignet.

Ein verringertes Schäumvermögen, das vor allem beim maschinellen Waschen erwünscht ist, erreicht man vielfach durch Kombination verschiedender Tensidtypen, z.B. von Sulfaten und/oder Sulfonaten mit Nonionics und/oder mit Seifen. Bei Seifen steigt die Schaumdämpfung mit dem Sättigungsgrad und der C-Zahl des Fettsäuresalzes an; Seifen der gesättigten $C_{20-24}$-Fettsäuren eignen sich deshalb besonders als Schaumdämpfer.

Zu den nichttensidartigen Schauminhibitoren gehören gegebenenfalls Chlor enthaltende N-alkylierte Aminotriazine, die man durch Umsetzen von 1 Mol Cyanurchlorid mit 2 bis 3 Mol eines Mono- und/oder Dialkylamins mit 6 bis 20, vorzugsweise 8 bis 18 C-Atomen im Alkylrest erhält.

Ähnlich wirken propoxylierte und/oder butoxylierte Aminotriazine, z.B. Produkte, die man durch Anlagern von 5 bis 10 Mol Propylenoxid an 1 Mol Melamin und weiteres Anlagern von 10 bis 50 Mol Butylenoxid an dieses Propylenoxidderivat erhält.

Ebenfalls geeignet als nichttensidartige Schauminhibitoren sind wasserunlösliche organische Verbindungen wie Paraffine oder Halogenparaffine mit Schmelzpunkten unterhalb von 100°C, aliphatische $C_{18}$- bis $C_{40}$-Ketone sowie aliphatische Carbonsäureester, die im Säure- oder im Alkoholrest, gegebenenfalls auch in jedem dieser beiden Reste, wenigstens 18 C-Atome enthalten (z.B. Triglyceride oder Fettsäurefettalkoholester); sie lassen sich vor allem bei Kombinationen von Tensiden des Sulfat- und/oder Sulfonattyps mit Seifen zum Dämpfen des Schaumes verwenden.

Die Waschmittel können optische Aufheller für Baumwolle, für Polyamid-, Polyacrylnitril- oder Polyestergewebe enthalten. Als optische Aufheller sind beispielsweise geeignet Derivate der Diaminostilbendisulfonsäure für Baumwolle, Derivate von 1,3-Diarylpyrazolinen für Polyamid, quartäre Salze von 7-Methoxy-2-benzimidazolyl-(2')-benzofuran oder von Derivaten aus der Verbindungsklasse der 7-[1',2',5'-Triazolyl-(1')]-3-[1",2",4"-triazolyl-(1")]-cumarine für Polyacrylnitril. Für Polyester geeignete Aufheller sind beispielsweise Produkte aus der Verbindungsklasse der substituierten Styrile, Ethylene, Thiophene, Naphthalindicarbonsäuren oder Derivate davon, Stilbene, Cumarine und Naphthalimide.

Als weitere Hilfsstoffe oder Formulierhilfsmittel können die dem Fachmann an sich bekannten Stoffe verwendet werden.

Beispiele

I. Herstellung der erfindungsgemässen Copolymerisate

Die K-Werte werden, soweit nicht anders angegeben, an 2 gew.%igen Lösungen der Natriumsalze der vollständig neutralisierten Copolymerisate in Wasser bei 25°C gemessen.

1. Allgemeine Herstellungsvorschrift für die Lösungspolymerisation

In einem mit Rührer versehenen Reaktor werden 336 Teile vollentsalztes Wasser, Monomer b) (Menge siehe Tabelle) und Natriumhydroxid (Menge siehe Tabelle) zum Sieden erhitzt. Anschliessend wird eine Mischung von 299 Teilen vollentsalztem Wasser, Monomer a) (Menge siehe Tabelle), Monomer c) und Monomer d) (Art und Menge siehe Tabelle) innerhalb 5 Stunden und gleichzeitig eine Lösung von 185 Teilen vollentsalztem Wasser, 4,65 Teilen Natriumperoxidisulfat und 15,45 Teilen Wasserstoffperoxid 30%ig innerhalb 6 Stunden zudosiert. Anschliessend wird noch 2 Stunden erhitzt und nach dem Abkühlen mit 50%iger Natronlauge weiter neutralisiert, bis ein pH-Wert von 8,0, gemessen als 10%ige Lösung, erreicht ist.

Bei den Beispielen 1 bis 3 und 12 wurde wegen zu hoher Viskosität zusätzlich während der Polymerisation mit Wasser verdünnt. Bei Beispiel 13 wurden 45 Teile Wasserstoffperoxid 30%ig (an Stelle von 15,45 Teilen) eingesetzt.

Die Beispiele der folgenden Tabelle 1 werden nach dieser Vorschrift durchgeführt. Dabei bedeuten Teile Gewichtsteile, MSA Maleinsäureanhydrid. AS Acrylsäure, MAS Methacrylsäure und IS Itaconsäure. Der Feststoffgehalt wird durch Trocknen, 2 Stunden bei 150°C, in einem Ofen bestimmt.

Tabelle 1

| Beispiel Nr. | Monomer b) Teile | | Natrium-hydroxid im Reaktor (Vorlage) [Teile] | Monomer a) Teile | | Monomer c) Teile | | Monomer d) Teile | | Feststoff-gehalt des Na-Salzes [%] | K-Wert der Na-Salze |
|---|---|---|---|---|---|---|---|---|---|---|---|
| 1 | 137,1 | MSA | 100,7 | 162,2 | AS | 139,1 | Butandiol-1,4-monoacrylat | – | – | 30,7 | 75,3 |
| 2 | 117,55 | MSA | 86,4 | 139,2 | AS | 185,5 | Butandiol-1,4-monoacrylat | – | – | 28,2 | 79,8 |
| 3 | 97,96 | MSA | 72,0 | 115,95 | AS | 231,9 | Butandiol-1,4-monoacrylat | – | – | 22,0 | 79,5 |
| 4 | 137,1 | MSA | 100,7 | 162,3 | AS | 139,1 | Hydroxypropylacrylat | – | – | 36,9 | 48 |
| 5 | 117,55 | MSA | 86,4 | 139,2 | AS | 185,5 | Hydroxypropylacrylat | – | – | 36,5 | 47,3 |
| 6 | 97,96 | MSA | 72,0 | 115,95 | AS | 231,9 | Hydroxypropylacrylat | – | – | 35,6 | 47,4 |
| 7 | 78,3 | MSA | 57,5 | 92,68 | AS | 278,0 | Hydroxypropylacrylat | – | – | 35,9 | 52,6 |
| 8 | 58,77 | MSA | 43,18 | 69,57 | AS | 324,66 | Hydroxypropylacrylat | – | – | 35,6 | 51,0 |
| 9 | 39,18 | MSA | 28,78 | 46,38 | AS | 371,0 | Hydroxypropylacrylat | – | – | 35,0 | 49,5 |
| 10 | 117,55 | MSA | 86,4 | 131,2 | AS | 185,5 | Hydroxyethylacrylat | – | – | 37,0 | 62 |
| 11 | 97,96 | MSA | 72,0 | 115,95 | AS | 231,9 | Hydroxyethylacrylat | – | – | 36,3 | 75 |
| 12 | 78,3 | MSA | 57,5 | 92,68 | AS | 278,0 | Hydroxyethylacrylat | – | – | 31,7 | 78 |
| 13 | 58,75 | MSA | 47,6 | 69,57 | AS | 324,66 | Hydroxyethylacrylat | – | – | 35,8 | 56,6 |
| 14 | 58,75 | MSA | 47,6 | 69,57 | AS | 278,0 | Hydroxypropylacrylat | 46,34 | Vinylacetat | 35,9 | 46,7 |
| 15 | 78,3 | MSA | 57,5 | 92,68 | AS | 231,9 | Hydroxypropylmethacrylat | 23,17 23,17 | Acrylnitril 2-Acrylami-do-2-me-thylpropyl-sulfonsäure | 36,8 | 64,5 |
| 16 | 19,59 | MSA | 14,39 | 23,19 | AS | 417,42 | Hydroxypropylacrylat | – | – | 35,4 | 42,8 |
| 17 | 78,3 | MSA | 57,5 | 92,68 | AS | 278,0 | Hydroxypropylmethacrylat | – | – | 37,9 | 46,0 |
| 18 | 58,77 69,50 | MSA IS | 81,5 | 46,33 46,33 | AS MAS | 115,8 115,8 | Hydroxypropylacrylat Hydroxypropylmethacrylat | – | – | 36,2 | 34,0 |
| 19 | 58,7 | MSA | 40 | 185,20 | AS | 208,35 | Hydroxyethylmonomaleinat | – | – | 35,8 | 31,5 |
| 20 | 115,95 | IS | 80 | 115,95 | MAS | 231,9 | Hydroxypropylacrylat | – | – | 36,7 | 48,5 |

Als Hydroxypropylacrylat wird ein Isomerengemisch aus 67 Gew.-% 2-Hydroxy-1-propylacrylat und 33 Gew.-% 1-Hydroxy-2-Propylacrylat verwendet.
Beispiel 16 ist ein Vergleichsbeispiel ausserhalb des Anspruches.

## Beispiel 21

Zur Verseifung der Vinylacetatgruppen wird das Copolymerisat aus Beispiel 14 in Form der bei der Polymerisation anfallenden Lösung mit 50%iger Schwefelsäure auf einen pH-Wert von 2,5 eingestellt und 2 Stunden bei 80°C erhitzt. Anschliessend erfolgt die Neutralisation mit Natronlauge bis zu einem pH-Wert von 8, gemessen als 10%ige Lösung. Nach der IR-spektroskopischen Analyse ergibt sich, dass 95% der Vinylacetateinheiten in Vinylalkoholeinheiten umgewandelt wurden. Der Feststoffgehalt der Lösung beträgt 34,2%. Der K-Wert des Natriumsalzes beträgt 42,3.

## Beispiel 22

Herstellung durch Suspensionspolymerisation

In einem Reaktor werden unter Rühren 500 Teile Cyclohexan, 25 Teile Maleinsäureanhydrid und 5 Teile Polyethylvinylether vom K-Wert 50, gemessen in 1%iger Lösung in Cyclohexanon bei 25°C, bis zum Sieden auf ca. 83°C erhitzt und innerhalb 3 Stunden 75 Teile wasserfreie Acrylsäure und 150 Teile Hydroxypropylacrylat (Gemisch aus 67 Gew.% 2-Hydroxy-1-propylacrylat und 33 Gew.% 1-Hydroxy-2-propylacrylat) und eine Lösung von 2,4 Teilen tert.-Butylper-2-ethylhexanoat in 60 Teilen Cyclohexan zudosiert. Anschliessend wird noch 1 Stunde unter Rückfluss erhitzt, 1,2 Teile tert.-Butylper-2-ethylhexanoat nachgegeben und nochmals 3 Stunden am Rückfluss erhitzt. Nach dem Abkühlen wird die feinkörnige Suspension abzentrifugiert und dann das Copolymere bei 80°C in einem Vakuumtrockenschrank getrocknet. Die Ausbeute an einem sehr feinen, weissen Polymeren beträgt 235 Teile. Diese werden in einer Kugelmühle mit 55 Teilen gepulvertem Natriumhydroxid 48 Stunden gemahlen. Der K-Wert des in Wasser löslichen Natriumsalzes des Copolymeren beträgt 63.

## Beispiel 23

Herstellung durch Fällungspolymerisation

In einem Reaktor werden unter Rühren 102 Teile Maleinsäureanhydrid, 550 Teile o-Xylol, 1 Teil Polymethylvinylether vom K-Wert 40, gemessen in 1%iger Lösung in Cyclohexanon bei 25°C, und 1 Teil Polyethylvinylether vom K-Wert 50, gemessen in 1%iger Lösung in Cyclohexanon bei 25°C, unter Stickstoff auf 100°C erhitzt und innerhalb 4 Stunden eine Mischung von 34 Teilen wasserfreier Acrylsäure, 204 Teilen Hydroxypropylacrylat (Gemisch aus 67 Gew.% 2-Hydroxy-1-propylacrylat und 33 Gew.% 1-Hydroxy-2-propylacrylat), 50 Teilen o-Xylol und 3,4 Teilen tert.-Butylperethylhexanoat zugefahren. Anschliessend wird eine Lösung von 50 Teilen o-Xylol und 3,4 Teilen Di-tert.-amylperoxid zugesetzt, zum Sieden auf etwa 138°C erhitzt und 2 Stunden nachreagieren gelassen. Die dünne Suspension wird in einem Schaufeltrockner zu einem weissen Pulver getrocknet. Die Ausbeute beträgt 338 g. Das Polymerisatpulver wird in einer Kugelmühle mit 92 Teilen pulverisiertem Natriumhydroxid 48 Stunden vermahlen. Der K-Wert des Natriumsalzes des Copolymeren beträgt 36.

## Beispiel 24

Herstellung durch Lösungspolymerisation in Methylethylketon

In einem Reaktor werden unter Rühren 400 Teile Methylethylketon und 117,5 Teile Maleinsäureanhydrid unter Stickstoff bis zum Sieden auf ca. 95°C erhitzt und anschliessend innerhalb von 5 Stunden eine Mischung aus 139,2 Teilen Acrylsäure, 185,5 Teilen Hydroxypropylacrylat und parallel innerhalb von 7 Stunden eine Lösung aus 10 Teilen 2,2'-Azobis-(isobutyronitril), gelöst in 100 Teilen Methylethylketon, gleichmässig in der Siedehitze zudosiert. Nun wird noch 2 Stunden unter Rückfluss erhitzt, mit 500 Teilen Wasser verdünnt und durch Einleiten von Wasserdampf das Methylethylketon abgetrieben bis zu einer Siedetemperatur von 100°C. Nun wird auf 40°C abgekühlt und durch Zugabe von 50%iger Natronlauge neutralisiert, bis ein pH-Wert von 8, gemessen als 10%ige Lösung, erreicht ist. Der Feststoffgehalt beträgt 39,6%; der K-Wert des Natriumsalzes ist 58,9.

## II. Anwendungsbeispiele

### A. Weissgradbestimmung

In einer vereinfachten Vollwaschmittelrezeptur wurden Copolymerisate gemäss den Beispielen der Tabelle 1 eingesetzt und die Weisswaschwirkung an WFK-Gewebe (Standardschmutzgewebe der Wäschereiforschung Krefeld) bestimmt. Als Waschgerät diente ein Launder-O-Meter.

Versuchsbedingungen
Temperatur: 40 bis 95°C
Flottenverhältnis: 1:25
Gewebe: WFK-Baumwollgewebe
Waschdauer: 45 min
Wasserhärte: 16°d
pH-Wert: 10,5
Waschmittelkonzentration: 7 g/l

Waschmittelzusammensetzung (Gew.%):
10% $C_{12}$-Alkylbenzolsulfonat (Na-Salz), 50%ig
5% $C_{16}/C_{18}$-Fettalkohol + 11 EO (Ethylenoxid)
20% Natriumperborat-tetrahydrat
7% Natriumsilikat
2% Carboxymethylcellulose-Na-Salz
3% Natriumstearat
3% Nitrilotriessigsäure-Na-Salz
15% Pentanatriumtriphosphat
3,5% Magnesiumsulfatheptahydrat
2,5% erfindungsgemässes Copolymerisat
Rest auf 100% Natriumsulfat (wasserfrei)

Die Versuchsergebnisse sind aus der Tabelle 2 ersichtlich.

## Tabelle 2
### Weissgrad an WFK-Baumwollgewebe

| Copolymerisat gemäss Tab. 1 | Weissgrad gemessen am Elrepho (Fa. Zeiss) (Remission) |
|---|---|
| Beispiel 1 | 73,3 |
| Beispiel 2 | 73,5 |
| Beispiel 5 | 73,6 |
| Beispiel 7 | 73,8 |
| Beispiel 11 | 73,5 |
| **Vergleichsversuche** | |
| Prod. 5 DE-OS 2 616 261 | 72,1 |
| Prod. 6 DE-OS 2 616 261 | 70,9 |
| Pentanatriumtriphosphat | 69,5 |

Aus den Werten dieser Tabelle ist ersichtlich, dass die erfindungsgemässen Polymerisate gegenüber den mitgeprüften Produkten des Standes der Technik und Pentanatriumtriphosphat, eine bessere Weisswaschwirkung (Primärwaschwirkung) aufweisen.

B. Bestimmung der vergrauungsinhibierenden Wirkung

Durch wiederholtes Waschen in Gegenwart von viel Schmutz wurde die vergrauungsinhibierende Wirkung der Copolymerisate im Vergleich zu Pentanatriumtriphosphat anhand des erhaltenen Weissgrades geprüft.

Waschmittelzusammensetzung wie unter A

Versuchsbedingungen
Temperatur: 60°C
Flottenverhältnis: 1:10
Gewebe: 10 g Baumwollfrotteegewebe (Frottee)
       5 g Baumwollpolyestergewebe (PES/BW, 67/33)
       5 g Polyestergewebe (PES)
       2,5 g Baumwollschmutzgewebe
       2,5 g Polyesterschmutzgewebe
Waschdauer: 30 min von 35 bis 60°C
Wasserhärte: 19,6° d
pH-Wert: 10,5
Waschmittelkonzentration: 8 g/l

Es wurde 5mal gewaschen, wobei nach jeder Wäsche das Schmutzgewebe erneuert wurde.

Die Versuchsergebnisse sind in der Tabelle 3 zusammengestellt.

## Tabelle 3
### Verdauungsinhibierende Wirkung

| Copolymerisat gemäss Tab. 1 | Weissgrad (% Remission gemessen am Elrepho der Fa. Zeiss) Anzahl der Wäschen: 5 | | | |
|---|---|---|---|---|
| | Prüfgewebe: PES | PES/BW 67/33 | Frottee | Mittelwert |
| Beispiel 5 | 80,2 | 66,1 | 61,3 | 69,2 |
| Beispiel 7 | 79,5 | 65,6 | 61,5 | 68,9 |
| Beispiel 10 | 81,0 | 68,5 | 62,1 | 70,5 |
| Beispiel 15 | 79,8 | 64,2 | 60,6 | 68,2 |
| ohne Copolymerisat | 75,5 | 51,5 | 48,5 | 58,5 |

Die Tabelle zeigt deutlich, wie die vergrauungsinhibierende Wirkung einer Rezeptur ohne erfindungsgemässes Copolymerisat durch diese gesteigert wird.

### C. Calcium- und Magnesiumbindevermögen

Die Bestimmung des Calcium-Bindevermögens erfolgte durch Trübungstitration mit Ca-acetat. Dazu löst man 1 g des zu prüfenden Komplexbildners in 100 ml destilliertem Wasser auf und versetzt dann mit 10 ml 2%iger Na-carbonat-Lösung. Der pH-Wert dieser Lösung wird auf 11 eingestellt und während der Titration konstant gehalten. Man titriert dann mit 4,4%iger Ca-acetat-Lösung bis eine deutliche konstante Trübung auftritt. Die Zugabe der Ca-acetat-Lösung erfolgt in Intervallen von 30 s mit jeweils 1 ml. 1 ml verbrauchter Ca-acetat-Lösung entspricht 25 mg Ca-carbonat. Die Angabe erfolgt in mg Ca-carbonat pro Gramm Komplexbildner.

Die Bestimmung des Mg-Bindevermögens wird analog durchgeführt.

Die Versuchsergebnisse sind in Tabelle 4 zusammengefasst.

Tabelle 4

Calcium- und Magnesiumbindevermögen

| Copolymerisat gemäss Tab. 1 | $CaCO_3$ mg/g | | $MgCO_3$ mg/g | |
|---|---|---|---|---|
| | 25°C | 90°C | 25°C | 90°C |
| Beispiel 1 | 750 | 575 | 693 | 525 |
| Beispiel 2 | 975 | 625 | 651 | 609 |
| Beispiel 3 | >1250 | 724 | 609 | 651 |
| Beispiel 4 | 874 | 625 | 651 | 566 |
| Beispiel 5 | >1250 | 775 | 777 | 566 |
| Beispiel 6 | >1250 | 925 | 777 | 777 |
| Beispiel 7 | >1250 | >1250 | 819 | 777 |
| Beispiel 8 | >1250 | 825 | 734 | 651 |
| Beispiel 11 | 1200 | 724 | 734 | 693 |
| Beispiel 12 | >1250 | 825 | 651 | 609 |
| Beispiel 14 | 1200 | 925 | 777 | 777 |
| Vergleichsbeispiele | | | | |
| Beispiel 16 | 225 | 25 | 441 | 200 |
| Produkt gemäss Beispiel 4 DE-OS 2 616 261 | >1250 | 100 | | |
| Produkt gemäss Beispiel 7 DE-OS 2 616 261 | >1250 | 150 | | |
| Pentanatriumtriphosphat | 325 | 175 | 483 | 315 |
| Produkt gemäss Beispiel 2 US-PS 4 314 044 | 896 | 214 | 632 | 318 |
| Beispiel 18 | 1250 | 825 | 861 | 819 |
| Beispiel 19 | 450 | 400 | 441 | 210 |
| Beispiel 20 | 1250 | 875 | 744 | 735 |
| Beispiel 21 | 1250 | 675 | 672 | 651 |
| Beispiel 22 | 1250 | 775 | 756 | 588 |

Aus den Werten dieser Tabelle geht deutlich hervor, wie die erfindungsgemässen Copolymerisate die Calcium- und Magnesiumsequestrierung erhöhen. Als wichtiges Kriterium für die Auswahl von Sequestriermittel für Härteionen ist die Sequestrierung bei erhöhter Temperatur (praxisnäher als bei Raumtemperatur). Dieser Wert ist für die erfindungsgemässen Copolymerisate gegenüber dem Stand der Technik überraschend hoch.

Im folgenden werden einige Rahmenrezepturen für Waschmittelformulierungen mit den erfindungsgemässen Copolymerisaten angegeben:

Formulierung 1
5% Dodecylbenzolsulfonat 100%ig, Na-Salz
3% $C_{13}$–$C_{15}$-Fettalkohol + 10 Mol Ethylenoxid 100%ig
3% Fettsäure $C_{18}$–$C_{22}$-Na-Salz
20% Pentanatriumtriphosphat
7% Natriummetasilikat · 5 $H_2O$
20% Natriumperborat
5% Nitrilotriessigsäure-Na-Salz
2% Carboxymethylcellulose-Na-Salz
2% Acrylsäure-Maleinsäure-Copolymerisat-Na-Salz
3% erfindungsgemässes Polymerisat gemäss Beispiel 1
0,5% optischer Aufheller vom Diaminostilbendisulfonsäuretyp
0,7% Enzyme vom Protease-Typ (Alcalase)
Rest auf 100% Natriumsulfat (wasserfrei)

Formulierung 2
6% Dodecylbenzolsulfonat 100%ig, Na-Salz
4% $C_{13}$–$C_{15}$-Fettalkohol + 7 EO
2% Schauminhibitor vom Silicontyp
20% Pentanatriumtriphosphat
5% Natriummetasilikat · 5 $H_2O$
15% Natriumperborat
3% Kaltbleichaktivator (Tetraacetylethylendiamin)
4% Nitrilotriessigsäure-Na-Salz
2% Phosphonat (z.B. Ethylendiamintetramethylenphosphonsäurepentanatriumsalz)
2% Copolymer Acrylsäure-Methylvinylether-Na-Salz
2% Copolymer Acrylsäure-Maleinsäure-Na-Salz
4% erfindungsgemässes Polymerisat gemäss Beispiel 5
0,5% optischer Aufheller vom Diaminostilbendisulfonsäuretyp
0,7% Enzyme vom Protease-Typ (Alcalase)
Rest auf 100% Natriumsulfat (wasserfrei)

Formulierung 3
8% $C_{13}$–$C_{15}$-Fettalkohol + 10 EO
2% $C_{13}$–$C_{15}$-Fettalkohol + 3 EO
10% Natriummetasilikat
10% $Na_2CO_3$
20% Natriumperborat
1% Magnesiumsulfat
25% Pentanatriumtriphosphat
0,5% Ethylendiamintetraessigsäuretetranatriumsalz

1,5% Phosphonat (Hydroxyethandiphosphonsäure)
1,5% Carboxymethylcellulose-Na-Salz
 4% erfindungsgemässes Copolymerisat gemäss
Beispiel 11
0,5 optischer Aufheller vom Diaminostilbendisulfonsäuretyp
0,7 % Enzyme vom Protease-Typ (Alcalase)
Rest auf 100% Natriumsulfat (wasserfrei)

## Patentansprüche

1. Copolymerisate mit einem K-Wert von 8 bis
100 (bestimmt nach H. Fikentscher in wässriger
Lösung bei 25°C an 2 gew.%igen Lösungen der
Natriumsalze von vollständig neutralisierten Copolymerisaten) erhältlich durch Copolymerisieren von Monomergemischen – jeweils bezogen
auf das Gewicht der eingesetzten Monomeren –
aus

a) 5 bis 40 Gew.% mindestens einer monoethylenisch ungesättigten Monocarbonsäure mit 3 bis
10 Kohlenstoffatomen,
b) 5 bis 40 Gew.% mindestens einer monoethylenisch ungesättigten Dicarbonsäure mit 4 bis 6
Kohlenstoffatomen oder eines dementsprechenden Dicarbonsäureanhydrids,
c) 30 bis 80 Gew.% mindestens eines Hydroxyalkylesters mit 2 bis 6 C-Atomen in der Hydroxyalkylgruppe von monoethylenisch ungesättigten
Mono- und/oder Dicarbonsäuren gemäss a) und/
oder b) und
d) 0 bis 10 Gew.% eines oder mehrerer mit den
Monomeren a), b) und c) copolymerisierbarer
carboxylgruppenfreier, monoethylenisch ungesättigter Monomerer
und deren Salze.

2. Copolymerisat nach Anspruch 1, erhältlich
durch Copolymerisieren von Monomerengemischen aus
a) 10 bis 30 Gew.% Acrylsäure oder Methacrylsäure und ihrer Mischungen,
b) 10 bis 30 Gew.% Maleinsäure oder Itakonsäure
und ihrer Mischungen und
c) 40 bis 70 Gew.% Hydroxypropylacrylat, Hydroxyethylacrylat und/oder Butan-1,4-diolmonoacry-
lat,
in wässriger Lösung, worin die Carbonsäuregruppen von a) und b) zu 20 bis 80% neutralisiert sind.
3. Wasch- und Reinigungsmittel, enthaltend
wenigstens ein Copolymerisat und/oder dessen
Salz nach den Ansprüchen 1 oder 2.
4. Wasch- und Reinigungsmittel, enthaltend
wenigstens ein Copolymerisat und/oder dessen
Salz nach den Ansprüchen 1 oder 2 in einer Menge von 0,5 bis 20 Gew.%, bezogen auf das Gesamtgewicht.
5. Verwendung der Copolymerisate und/oder
deren Salze nach Anspruch 1 oder 2 als Sequestrierungsmittel für Calcium und Magnesium und
als Vergrauungsinhibitoren in Wasch- und Reinigungsmitteln.

## Claims

1. Copolymers having a K value of from 8 to
100 (determined according to H. Fikentscher in
aqueous solution at 25°C in a solution of 2%
strength by weight of the sodium salt of a completely neutralized copolymer) obtainable by copolymerizing a monomer mixture of
a) 5 to 40% by weight of at least one monoethylenically unsaturated monocarboxylic acid having
3 to 10 carbon atoms,
b) 5 to 40% by weight of at least one monoethylenically unsaturated dicarboxylic acid having 4 to
6 carbon atoms or a corresponding dicarboxylic
anhydride,
c) 30 to 80% by weight of at least one hydroxyalkyl ester, having 2 to 6 carbon atoms in the hydroxyalkyl group, of monoethylenically unsaturated mono- and/or dicarboxylic acids according
to a) and/or b), and
d) 0 to 10% by weight of one or more monoethylenically unsaturated monomers which are free of
carboxyl groups and are copolymerizable with
the monomers a), b) and c), the percentages in
each case being based on the weight of the monomers used,
and their salts.
2. Copolymer as claimed in claim 1, obtainable
by copolymerizing a monomer mixture of
a) 10 to 30% by weight of acrylic acid or methacrylic acid and mixtures of these,
b) 10 to 30% by weight of maleic acid or itaconic
acid and mixtures of these, and
c) 40 to 70% by weight of hydroxypropyl acrylate,
hydroxyethyl acrylate and/or butane-1,4-diol
monoacrylate, in aqueous solution, in which
20–80% of the carboxylic acid groups of a) and b)
are neutralized.
3. Detergents and cleaning agents containing
at least one copolymer and/or its salt as claimed
in claims 1 or 2.
4. Detergents and cleaning agents containing
at least one copolymer and/or its salt as claimed
in claims 1 or 2, in an amount of 0.5 to 20% by
weight, based on the total weight.
5. Use of the copolymers and/or their salts as
claimed in claim 1 or 2 as sequestering agents for
calcium and magnesium and as antiredeposition
agents in detergents and cleaning agents.

## Revendications

1. Copolymères ayant une valeur K de 8 à 100
(déterminée d'après H. Fikentscher en solution
aqueuse à 25°C, sur des solutions à 2% en poids
des sels sodiques de copolymères complètement
neutralisés), pouvant être obtenus par copolymérisation de mélanges de monomères se composant (sur la base du poids des monomères mis en
réaction) de:
a) 5 à 40% en poids d'au moins un acide monocarboxylique à 3–10 atomes de carbone insaturé
monoéthyléniquement,
b) 5 à 40% en poids d'au moins un acide dicarboxylique à 4–6 atomes de carbone insaturé monoéthyléniquement ou d'un anhydride d'acide dicarboxylique correspondant,

c) 30 à 80% en poids d'au moins un ester hydroxyalkylique d'acides mono- et/ou dicarboxyliques insaturés monoéthyléniquement selon a) et/ou b), contenant 2 à 6 atomes de carbone dans le groupement hydroxyalkyle, et

d) 0 à 10% en poids d'un ou de plusieurs monomères insaturés monoéthyléniquement, exempts de groupes carboxyle, copolymérisables avec les monomères a), b) et c), ainsi que leurs sels.

2. Copolymère selon la revendication 1, pouvant être obtenu par copolymérisation de mélanges de monomères composés de:

a) 10 à 30% en poids d'acide acrylique ou d'acide méthacrylique et de leurs mélanges,

b) 10 à 30% en poids d'acide maléique ou d'acide itaconique et de leurs mélanges et

c) 40 à 70% en poids d'acrylate d'hydroxypropyle, d'acrylate d'hydroxyéthyle et/ou de monoacrylate de butane-1,4-diol, en solution aqueuse, les groupements acide carboxylique de a) et b) étant neutralisés à 20-80%.

3. Milieux de lavage et de nettoyage, contenant au moins un copolymère et/ou un de ses sels selon la revendication 1 ou 2.

4. Milieux de lavage et de nettoyage, contenant au moins un copolymère et/ou un de ses sels selon la revendication 1 ou 2, à raison de 0,5 à 20% en poids par rapport au poids total.

5. Utilisation des copolymères et/ou de leurs sels selon la revendication 1 ou 2, comme milieux séquestrants du calcium et du magnésium et comme inhibiteurs de grisaillement dans des milieux de lavage et de nettoyage.